# FASCICULE DE BREVET EUROPEEN

(11) **EP 2 036 198 B1**
(45) Date de publication et mention de la délivrance du brevet: **28.12.2011**
(21) Numéro de dépôt: 07788969.9
(22) Date de dépôt: 06.06.2007
(51) Int. Cl.: H02P 9/00, H02J 7/14

(54) **PROCEDE DE GESTION D'UN RESEAU D'ALIMENTATION ELECTRIQUE A TENSION VARIABLE, NOTAMMENT DE VEHICULE AUTOMOBILE**
VERFAHREN ZUR VERWALTUNG EINES STROMVERSORGUNGSSYSTEMS MIT VARIABLER SPANNUNG, INSBESONDERE EINES KRAFTFAHRZEUGS
METHOD FOR MANAGING A POWER SUPPLY SYSTEM WITH A VARIABLE VOLTAGE, ESPECIALLY OF A MOTOR VEHICLE

(30) Priorité: 30.06.2006 FR 0652754
(43) Date de publication de la demande: 18.03.2009
(73) Titulaire: VALEO EQUIPEMENTS ELECTRIQUES MOTEUR, 94046 Créteil Cedex (FR)
(72) Inventeur: DOFFIN, Hugues, 92290 Chatenay Malabry (FR); BOUDJEMAI, Farouk, 91460 Marcoussis (FR); MASFARAUD, Julien, 75010 Paris (FR)
(86) Numéro de dépôt international: PCT/FR2007/051385
(87) Numéro de publication internationale: WO 2008/000984

(56) Documents cités:
- EP-A2- 0 539 982

## Description

### DOMAINE TECHNIQUE DE L'INVENTION

La présente invention concerne un procédé de gestion d'un réseau d'alimentation à tension variable, notamment un réseau de bord de véhicule automobile.

### ARRIERE PLAN TECHNOLOGIQUE DE L'INVENTION

Dans le but de trouver une réponse à l'augmentation du nombre et de la consommation électrique des équipements embarqués à bord des véhicules automobiles, a été développé depuis quelques années le concept de réseau d'alimentation électrique bi-tension.

La demande de brevet FR2836604 décrit un tel système d'alimentation électrique bi-tension.

Une partie du réseau est alimentée par un élément de stockage d'énergie à basse tension, constante, généralement constitué par une batterie de 12V.

Une autre partie du réseau est alimentée par un élément de stockage de l'énergie électrique à haute tension, généralement constitué par un ultracondensateur, chargé à tension variable, via un régulateur, par un alternateur entraîné par le moteur thermique du véhicule.

Le réseau basse tension est principalement utilisé pour alimenter les charges électriques de faible puissance telles que l'éclairage du tableau de bord ou de l'habitacle, la radio, les actionneurs des fermetures des portières, les feux de signalisation, etc...

Le réseau haute tension sert à alimenter les équipements de bord requérant une forte puissance électrique, tels le démarreur du moteur thermique, les projecteurs, ou l'installation de climatisation.

Les transferts d'énergie électrique entre les deux parties du réseau sont réalisés au moyen d'un convertisseur continu-continu réversible, et sont gérés en fonction des ressources demandées et disponibles sur l'un et l'autre des réseaux, comme il est notamment indiqué dans la demande de brevet précitée.

La tension du réseau basse tension étant sensiblement constante, les équipements connectés en parallèle ne possèdent chacun qu'un seul point de fonctionnement liant tension aux bornes et courant, pour une puissance électrique donnée.

Dans le cas d'un réseau électrique de bord classique, à tension fixe, alimenté par un élément de stockage de l'énergie électrique associé à un alternateur régulé sur cette tension fixe, la seule possibilité d'optimisation du rendement du système semble être de gérer l'utilisation soit de l'alternateur, soit de la batterie, soit une combinaison des deux en fonction de la demande énergétique, comme le propose la demande de brevet US20020171392.

En revanche, la tension du réseau haute tension étant variable, les équipements connectés en parallèle sur ce réseau, qu'ils soient consommateurs ou producteurs d'énergie électrique, présentent plusieurs points de fonctionnement possibles pour une même puissance électrique absorbée ou générée.

Ainsi, par EP0539982A2, il est connu un dispositif d'alimentation électrique pour un véhicule comprenant un alternateur pour générer une tension de sortie destinée à charger une première batterie et une seconde batterie ayant une tension supérieure à la première batterie. La tension de sortie de l'alternateur est commandée par un régulateur de tension en fonction de la vitesse de rotation de l'alternateur. Lorsque la vitesse de rotation est dans une plage de basse vitesse, le régulateur de tension commande la tension de sortie de l'alternateur à une première valeur qui est appropriée pour charger la première batterie. Lorsque la vitesse de rotation est dans une plage de haute vitesse, le régulateur de tension commande la tension de sortie de l'alternateur à une seconde valeur supérieure à la première valeur et qui est appropriée pour charger la seconde batterie. La tension de sortie de l'alternateur est commutée entre la première valeur et la seconde valeur pour une vitesse de rotation à laquelle une puissance de sortie de l'alternateur avec la première tension de sortie est égale à la puissance de sortie avec la seconde tension de sortie. Le dispositif peut comprendre un convertisseur de tension qui réduit la tension de sortie de l'alternateur à une tension appropriée pour charger la première batterie lorsque l'alternateur fournit de l'énergie avec la seconde tension. De plus, lorsque l'alternateur fournit de l'énergie avec la seconde tension, un point de raccordement du bobinage statorique de l'alternateur, ayant une tension inférieure à la tension de sortie de l'alternateur, peut être relié à la première batterie afin de charger celle-ci.

### DESCRIPTION GENERALE DE L'INVENTION

La présente invention vise un procédé de gestion d'un réseau d'alimentation électrique à tension variable, notamment de véhicule automobile, tel que défini par la revendication 1 ci-annexée.

Selon une caractéristique du procédé selon l'invention, la tension de sortie optimale est comprise dans une plage entre environ 20 V et environ 26 V, pour une vitesse de rotation instantanée comprise entre 1 800 tr/mn et 3000 tr/mn,

Ces quelques spécifications essentielles auront rendu évidents pour l'homme de métier les avantages apportés par le procédé selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS

La Figure 1 est le schéma électrique d'un réseau d'alimentation électrique bi-tension connu de l'état de la technique, dont le réseau haute tension est adapté à la mise en oeuvre du procédé selon l'invention, et comportant notamment un régulateur associé à une machine électrique tournante fonctionnant en génératrice.
La Figure 2 montre des exemples de courbes de la puissance électrique débitée par la machine électrique tournante fonctionnant en génératrice représentée sur la Figure 1 en fonction de la tension de sortie du régulateur, pour différentes vitesses de rotation instantanées.
La Figure 3 représente des exemples de courbes isopuissance dans l'espace tension de régulation/ vitesse de rotation instantanée de la machine électrique tournante fonctionnant en génératrice représentée sur la Figure 1.
La Figure 4 représente des exemples de courbes isorendement dans l'espace courant débité/ vitesse de rotation instantanée de la machine électrique tournante fonctionnant en génératrice représentée sur la Figure 1, pour une première tension de régulation.
La Figure 5 représente des exemples de courbes isorendement dans l'espace courant débité/ vitesse de rotation instantanée de la machine électrique tournante fonctionnant en génératrice représentée sur la Figure 1, pour une seconde tension de régulation supérieure à la première tension de régulation.
La Figure 6 illustre un mode de fonctionnement cyclique du réseau d'alimentation électrique à tension variable représenté sur la Figure 1 selon le procédé de l'invention.

### DESCRIPTION DES MODES DE REALISATION PREFERES DE L'INVENTION

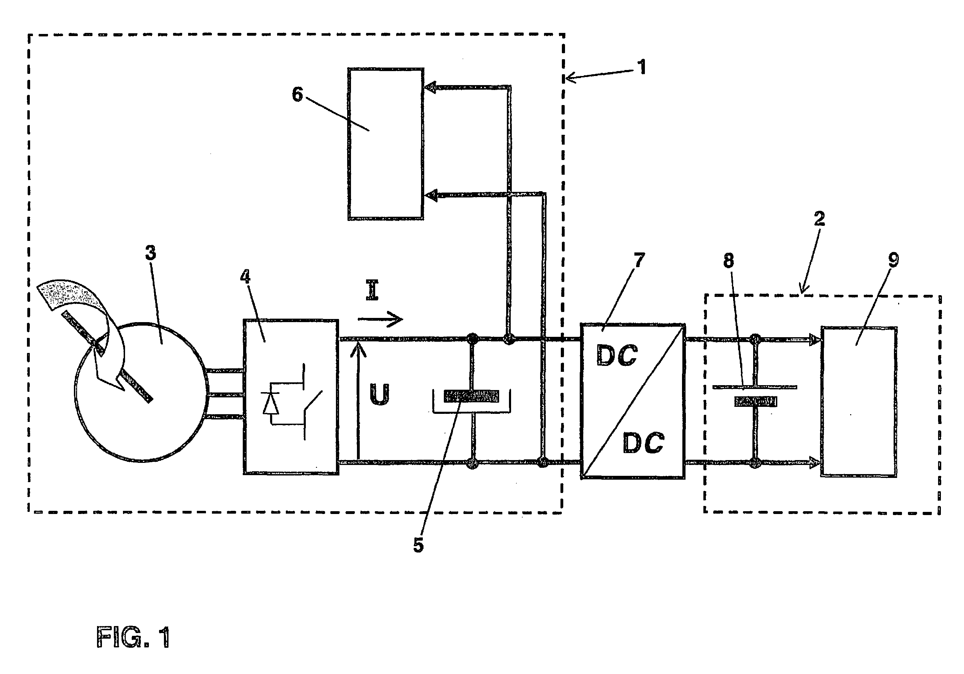

La Figure 1 montre schématiquement un exemple de réseau d'alimentation électrique bi-tension 1,2 installé couramment à bord des véhicules automobiles.

Le réseau bi-tension 1,2 présente un réseau haute tension 1 comprenant:
- une machine électrique tournante polyphasée 3, fonctionnant en génératrice;
- un régulateur 4 fournissant une tension de sortie continue à partir des courants de phases de la machine électrique 3 ;
- un élément de stockage de l'énergie électrique 5 constitué de préférence par une supercapacité, ou un ultracondensateur ;
- une charge 6 consommatrice d'énergie électrique ;

Ce réseau haute tension 1 est connecté par un convertisseur continu-continu 7 réversible à un réseau basse tension 2 comprenant un autre élément de stockage de l'énergie électrique 8, constitué généralement par une batterie de 12V, et d'autres charges électriques de faible puissance 9.

Le convertisseur continu-continu 7 étant réversible, la batterie 8 fournit, dans certains modes de fonctionnement du réseau bi-tension 1,2, de l'énergie au réseau haute tension 1.

C'est le cas notamment pour charger l'ultracondensateur 5 quand la machine électrique tournante 3 fonctionne en moteur, le module électronique de puissance 4 connectant la machine 3 au réseau, qui fait fonction de régulateur 4 en mode alternateur, fonctionnant alors en onduleur 4 pour générer les courants des phases à partir de la haute tension continue du réseau 1.

Un élément de stockage tel qu'un ultracondensateur 5 présente une fourchette de tensions de charge U admissibles généralement comprises entre une première tension de service de 16V et une seconde tension de service de 28V, par exemple,

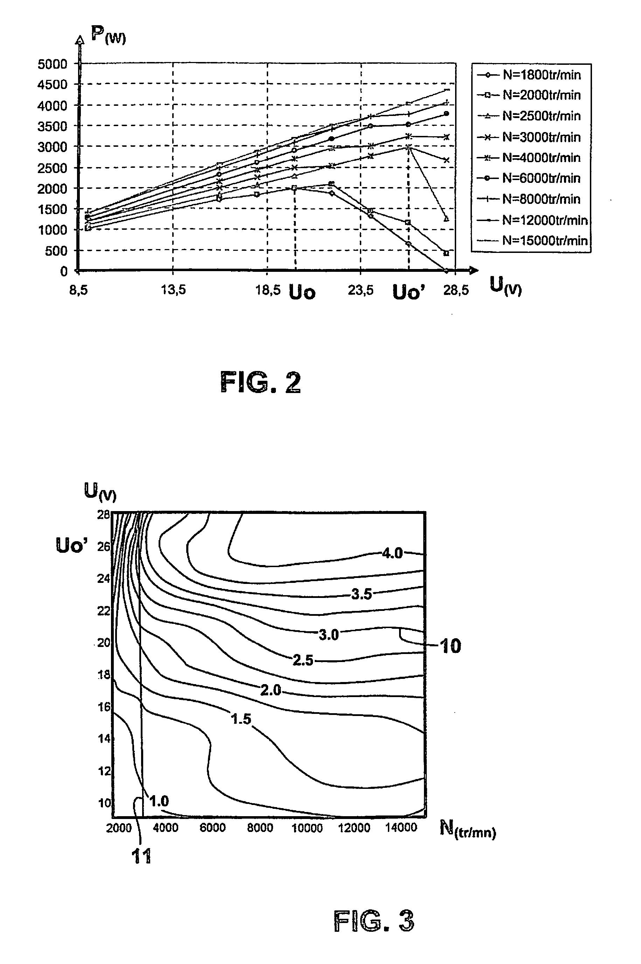

Les Figures 2,3,4 et 5 permettent de bien comprendre comment la variabilité de la tension de charge U de l'ultracondensateur 5, c'est-à-dire de la tension du réseau haute tension 1, autorise une maximisation de la puissance électrique disponible et/ou du rendement, en mettant en oeuvre le procédé selon l'invention.

On remarque sur la Figure 2, donnant la puissance débitée P en fonction de la tension de sortie du régulateur U pour différentes valeurs de la vitesse de rotation instantanée N, que pour une vitesse de rotation instantanée N donnée, il existe une tension de sortie optimale Uo,Uo' du régulateur 4 qui maximise la puissance électrique P débitée.

Par exemple, quand la vitesse de rotation instantanée N est de 1.800 tr/mn, la tension de sortie optimale Uo du régulateur 4 est proche de 20V, et la puissance électrique débitée P atteint le maximum de 2kW.

Quand la vitesse de rotation instantanée N est de 3000 tr/mn, la tension de sortie optimale Uo' est de 26V pour une puissance électrique débitée de 3kW.

Pour des vitesses de rotation instantanées N supérieures à cette vitesse de rotation nominale de 3000 tr/mn, la puissance électrique débitée croît avec la tension de sortie U du régulateur 4, et de ce fait, n'est limitée que par la seconde tension de service de 28V de l'ultracondensateur 5.

La même stratégie de maximalisation de la puissance électrique P débitée apparaît aussi clairement au vu de la Figure 3 montrant les courbes isopuissance (en kilowatt) dans l'espace tension de sortie U/ vitesse de rotation instantanée N.

Par exemple, la courbe 10 correspondant à une puissance électrique P débitée de 3,0 kW est tangente à la droite 11 d'abscisse N=3000 en un point d'ordonnée Uo'=26V.

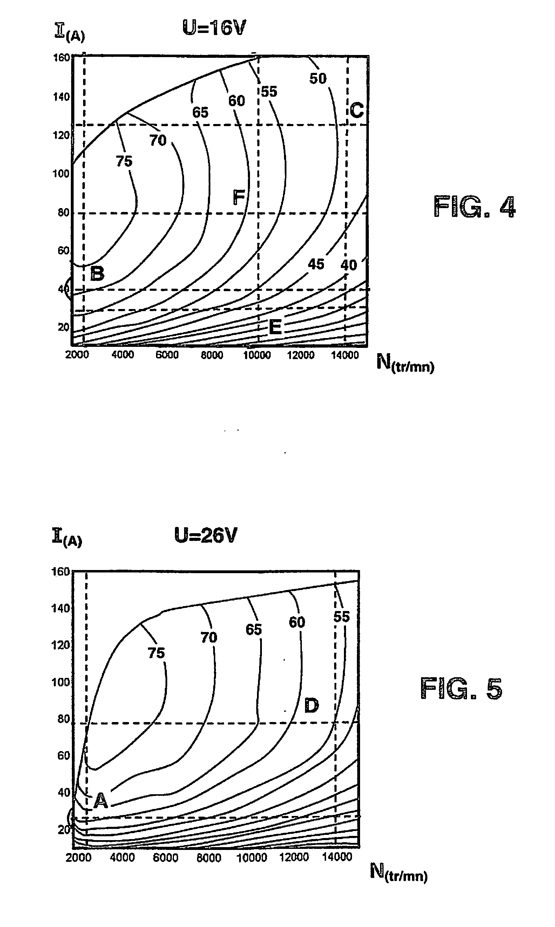

Une stratégie de gestion du réseau 1 privilégiant le rendement se déduit quant à elle des courbes isorendement dans l'espace courant débité I/ vitesse de rotation instantanée N montrées sur les Figures 4 et 5 (rendements exprimés en %).
La Figure 4 montre un ensemble de courbes isorendement quand la tension de sortie du régulateur U est de 16V.
La Figure 5 montre un ensemble de courbes isorendement quand la tension de sortie du régulateur U est de 26V.

### Exemple 1

On suppose que le besoin électrique du véhicule est de 640W, et que le moteur thermique du véhicule entraîne la machine électrique 3 à la vitesse de rotation instantanée N de 2500 tr/mn.

Si la tension de sortie U du régulateur 4 est fixée à 26V, l'intensité I débitée est alors de 25A. La Figure 5 montre que le rendement est d'environ 62%, au point A d'abscisse 2500 tr/mn et d'ordonnée 25A.

Si la tension de sortie U du régulateur 4 est fixée à 16V, l'intensité I débitée est alors de 40A. La Figure 4 montre que le rendement est d'environ 70%, au point B d'abscisse 2500 tr/mn et d'ordonnée 40A.

### Exemple 2

A 14.000 tr/mn, si le besoin électrique du véhicule est de 2kW, et que la tension de sortie U du régulateur 4 est fixée à 16V, le débit I est de 125A. La Figure 4 montre que le rendement est d'environ 48%, au point C d'abscisse 14.000 tr/mn et d'ordonnée 125A.

Si la tension de sortie U du régulateur 4 est fixée à 26V, le débit I de 76A est associé à un rendement de 55% (Point D d'abscisse 14.000 tr/mn et d'ordonnée 76A de la Figure 5).

Quand la vitesse de rotation instantanée N de la génératrice 3 est inférieure à une vitesse de rotation nominale d'environ 3000 ou 4000 tr/mn, les exemples ci-dessus montrent qu'il convient de fixer la tension de sortie U du régulateur 4 à la tension la plus basse de la plage de régulation compatible avec les caractéristiques de l'élément de stockage 5, c'est-à-dire à la première tension de service de l'élément de stockage 5, afin de maximiser le rendement du transfert d'énergie de la machine électrique 3 vers la charge 6 du réseau haute tension 1.

Au contraire, quand la vitesse de rotation instantanée N de la génératrice 3 est supérieure à cette vitesse de rotation nominale, la stratégie d'optimisation du rendement consiste à fixer la tension de sortie U du régulateur 4 à la tension la plus élevée compatible avec les caractéristiques de l'élément de stockage 5, c'est-à-dire la seconde tension de service.

Les Figures 4 et 5 montrent que le rendement augmente globalement avec le débit I. Pour un besoin en puissance électrique donné, il est donc préférable de débiter plus de puissance en fonctionnant cycliquement.

### Exemple 3

On suppose que le besoin électrique du véhicule est de 500W. La vitesse de rotation instantanée N est de 10.000 tr/mn.

On fixe la tension de sortie U du régulateur 4 à environ 16V. Les courbes isorendement correspondantes sont données sur la Figure 4.

L'intensité débitée étant de 30A, le rendement est d'environ 43% au point E d'abscisse 10.000 tr/mn et d'ordonnée 30A.

Si le débit était de 80A, pour une puissance débitée de 1250W, à la même vitesse de rotation instantanée N, le rendement serait proche de 60% (point F).

Selon le procédé de l'invention, le rendement du réseau d'alimentation électrique 1, est amélioré en débitant une puissance instantanée égale à une première puissance nominale P1 de 1250W uniquement pendant une fraction T1 d'un intervalle de temps T1 +T2, le débit étant nul pendant le reste T2 de l'intervalle de temps, de manière que la moyenne temporelle de cette puissance instantanée P soit égale à une seconde puissance nominale P2 de 500W correspondant au besoin du véhicule.

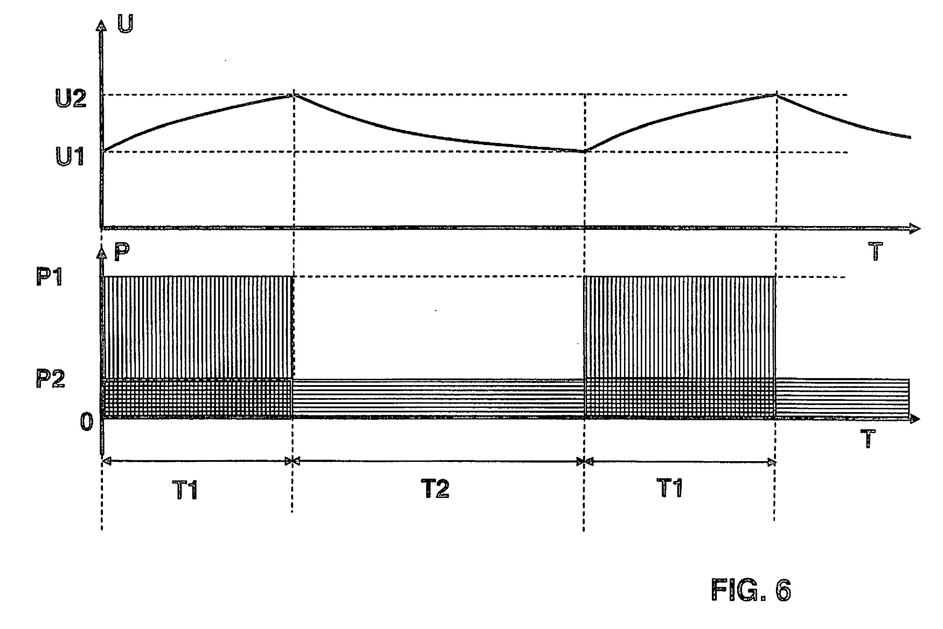

La Figure 6 montre la variation de la puissance instantanée P débitée au cours du temps T.

De préférence, la période T1 + T2 des débits est environ de 5s. Si la fraction T1 de cet intervalle de temps est de 2s, la valeur moyenne de la puissance instantanée est bien de 1250W x 2 / 3 = 500 W.

Comme le montre aussi la Figure 6, dans le cas où l'élément de stockage d'énergie 5 est un ultracondensateur, la tension aux bornes de cette capacité augmente légèrement au dessus du point de régulation initial U1 au cours du débit.

Si la durée T1 du débit I est faible, la variation U2-U1 est faible pour une capacité C importante.

Dans l'exemple 3 ci-dessus, la capacité est chargée pendant T1=2s par un courant égal au courant débité I =80A moins le courant de 30A absorbé par la charge 6, soit I c=50A.

Pour une capacité C=170F, la variation de tension est U2-U1 =Ic*T1/C, soit environ 0,6 V.

Dans l'exemple 3, la machine électrique 3 reste donc bien autour du point de régulation choisi, et le rendement est proche de 55%, c'est-à-dire supérieur de plus de 10% au rendement qui serait obtenu si le procédé selon l'invention n'était pas mis en oeuvre. de rotation, des tensions, des intensités, des puissances et des rendements ne sont données qu'à titre d'exemples.

## Revendications

1. Procédé de gestion d'un réseau (1) d'alimentation électrique à tension variable (U), notamment de véhicule automobile, ledit réseau (1) comprenant, connectés en parallèle:
- au moins un régulateur (4) associé à une machine électrique tournante (3) fonctionnant en génératrice à une vitesse de rotation instantanée (N) inférieure ou supérieure à une vitesse de rotation nominale prédéterminée, ledit régulateur (4) produisant une tension de sortie (U) comprise entre une première tension de régulation et une seconde tension de régulation supérieure à ladite première tension de régulation ;
- au moins un élément de stockage d'énergie électrique (5) présentant une tension de charge comprise entre une première tension de service et une seconde tension de service supérieure à ladite première tension de service ;
- au moins une charge (6) consommatrice d'énergie électrique ;
consistant alternativement,
selon le mode de fonctionnement désiré dudit réseau (1), à :
- fixer, en fonction de ladite vitesse de rotation instantanée (N) de ladite machine (3), ladite tension de sortie (U) à une tension de sortie optimale (Uo,Uo') comprise entre ladite première tension de service et ladite seconde tension de service et charger ledit élément de stockage (5) à partir de ladite tension de sortie optimale (Uo,Uo'), maximisant ainsi la puissance électrique (P) débitée par ladite machine dans ledit élément de stockage (5);
- fixer, quand ladite vitesse de rotation instantanée (N) est inférieure à ladite vitesse de rotation nominale, ladite tension de sortie (U) à une première valeur sensiblement égale à ladite première tension de service et charger ledit élément de stockage (5) à partir de ladite tension de sortie (U), maximisant ainsi le rendement du transfert d'énergie de ladite machine (3) vers ladite charge (6);
- fixer, quand ladite vitesse de rotation instantanée (N) est supérieure à ladite vitesse de rotation nominale, ladite tension de sortie (U) à une seconde valeur sensiblement égale à ladite seconde tension de service et charger ledit élément de stockage (5) à partir de ladite tension de sortie (U), maximisant ainsi le rendement du transfert d'énergie de ladite machine (3) vers ladite charge (6), **caractérisé en ce qu'**il comprend également l'étape de :
- charger périodiquement ledit élément de stockage (5) au moyen de ladite machine (3) avec une puissance électrique instantanée (P) égale à une première puissance nominale (P1) uniquement pendant une fraction (T1) d'un intervalle de temps (T1+T2) prédéterminé, ladite première puissance nominale (P1) étant choisie de manière que la moyenne temporelle de ladite puissance instantanée (P) soit égale à une seconde puissance nominale (P2) requise par ladite charge (6), et de manière à maximiser le rendement du transfert d'énergie de ladite machine (3) vers ladite charge (6).

2. Procédé selon la revendication 1, **caractérisé en ce que** la tension de sortie optimale (Uo) est comprise dans une plage entre environ 20V et environ 26 V pour une vitesse de rotation instantanée (N) comprise entre 1 800 tr/mn et 3000 tr/mn.

## Claims

1. Method for managing an electrical power supply network (1) with variable voltage (U), in particular of a motor vehicle, said network (1) comprising, connected in parallel:
- at least one regulator (4) associated with a rotating electric machine (3) operating as generator at an instantaneous speed of rotation (N) less than or greater than a predetermined nominal speed of rotation, said regulator (4) producing an output voltage (U) between a first regulation voltage and a second regulation voltage greater than said first regulation voltage;
- at least one electrical energy storage element (5) having a load voltage between a first service voltage and a second service voltage greater than said first service voltage;
- at least one load (6) consuming electrical energy;
consisting alternately,
depending on the desired mode of operation of said network (1), in:
- setting, according to said instantaneous speed of rotation (N) of said machine (3), said output voltage (U) to an optimum output voltage (Uo, Uo') between said first service voltage and said second service voltage and loading said storage element (5) from said optimum output voltage (Uo, Uo'), thus maximizing the electrical power (P) output by said machine into said storage element (5);
- setting, when said instantaneous speed of rotation (N) is less than said nominal speed of rotation, said output voltage (U) to a first value substantially equal to said first service voltage and loading said storage element (5) from said output voltage (U), thus maximizing the efficiency of the energy transfer from said machine (3) to said load (6);
- setting, when said instantaneous speed of rotation (N) is greater than said nominal speed of rotation, said output voltage (U) to a second value substantially equal to said second service voltage and loading said storage element (5) from said output voltage (U), thus maximizing the efficiency of the energy transfer from said machine (3) to said load (6), **characterized in that** it also comprises the step of:
- periodically loading said storage element (5) by means of said machine (3) with an instantaneous electrical power (P) equal to a first nominal power (P1) only during a fraction (T1) of a predetermined time interval (T1 + T2), said first nominal power (P1) being chosen such that the time average of said instantaneous power (P) is equal to a second nominal power (P2) required by said load (6), and so as to maximize the efficiency of the energy transfer from said machine (3) to said load (6).

2. Method according to Claim 1, **characterized in that** the optimum output voltage (Uo) lies within a range between approximately 20 V and approximately 26 V for an instantaneous speed of rotation (N) between 1800 rpm and 3000 rpm.

## Patentansprüche

1. Verfahren zum Steuern eines Stromversorgungsnetzes (1) mit variabler Spannung (U), insbesondere für Kraftfahrzeug, wobei das Netz (1) in einer Parallelschaltung umfasst:
- wenigstens einen Regulierer (4), der einer drehenden elektrischen Maschine (3) zugeordnet ist, die als Generator mit einer Momentandrehzahl (N), die kleiner oder größer als eine vorgegebene Nenndrehzahl ist, arbeitet, wobei der Regulierer (4) eine Ausgangsspannung (U) erzeugt, die zwischen einer ersten Regulierungsspannung und einer zweiten Regulierungsspannung, die höher als die erste Regulierungsspannung ist, liegt;
- wenigstens ein Element (5) zum Speichern elektrischer Energie, das eine Ladespannung besitzt, die zwischen einer ersten Dienstspannung und einer zweiten Dienstspannung, die höher als die erste Dienstspannung ist, liegt;
- wenigstens eine Last (6) als Verbraucher elektrischer Energie;
das abwechselnd
je nach gewünschter Betriebsart des Netzes (1) darin besteht:
- als Funktion der Momentandrehzahl (N) der Maschine (3) die Ausgangsspannung (U) auf eine optimale Ausgangsspannung (Uo, Uo') zu fixieren, die zwischen der ersten Dienstspannung und der zweiten Dienstspannung liegt, und das Speicherelement (5) anhand dieser optimalen Ausgangsspannung (Uo, Uo') zu laden, um so die elektrische Leistung (P), die von der Maschine an das Speicherelement (5) geliefert wird, maximal zu machen;
- dann, wenn die Momentandrehzahl (N) kleiner als die Nenndrehzahl ist, die Ausgangsspannung (U) auf einen ersten Wert zu fixieren, der im Wesentlichen gleich der ersten Dienstspannung ist, und das Speicherelement (5) anhand der Ausgangsspannung (U) zu laden, um so die Übertragungsleistung von Energie von der Maschine (3) zu der Last (6) maximal zu machen;
- dann, wenn die Momentandrehzahl (N) größer ist als die Nenndrehzahl, die Ausgangsspannung (U) auf einen zweiten Wert zu fixieren, der im Wesentlichen gleich der zweiten Dienstspannung ist, und das Speicherelement (5) anhand dieser Ausgangsspannung (U) zu laden, um so die Übertragungsleistung von Energie von der Maschine (3) zu der Last (6) maximal zu machen, **dadurch gekennzeichnet, dass** es außerdem den folgenden Schritt umfasst:
- periodisches Laden des Speicherelements (5) mittels der Maschine (3) mit einer momentanen elektrischen Leistung (P), die gleich einer ersten Nennleistung (P1) ist, ausschließlich während eines Bruchteils (T1) eines vorgegebenen Zeitintervalls (T1 + T2), wobei die erste Nennleistung (P1) in der Weise gewählt ist, dass der zeitliche Mittelwert der momentanen Leistung (P) gleich einer zweiten Nennleistung (P2) ist, die von der Last (6) angefordert wird, und in der Weise, dass die Übertragungsleistung von Energie von der Maschine (3) zu der Last (6) maximal gemacht wird.

2. Verfahren nach Anspruch 1, **dadurch gekennzeichnet, dass** die optimale Ausgangsspannung (Uo) in einem Bereich von etwa 20 V bis etwa 26 V bei einer Momentandrehzahl (N) im Bereich von 1800 min⁻¹ bis 3000 min⁻¹ liegt.
